# EUROPEAN PATENT APPLICATION

(11) **EP 4 825 766 A1**
(43) Date of publication of application: **21.10.2026**
(21) Application number: 26168420.3
(22) Date of filing: 27.03.2026
(51) Int. Cl.: B65G 47/88, B65G 1/04

(54) **BIDIRECTIONAL BLOCKING DEVICE FOR LIFTING PLATFORM OF AUTOMATED STORAGE AND RETRIEVAL SYSTEM AND BLOCKING METHOD THEREOF**

(30) Priority: 18.04.2025 CN 202510489063
(71) Applicant: SHANGHAI ZS ROBOTICS CO., LTD, Shanghai 201111 (CN)
(72) Inventor: CUI, Lei, Shanghai, 201111 (CN); LUO, Qiang, Shanghai, 201111 (CN)
(74) Representative: Cleanthous, Marinos

(57) **Abstract**

A bidirectional blocking device for a lifting platform of an automated storage and retrieval system and a blocking method thereof are provided. The device includes a high-bay rack, a lifting platform, a travel rail, and a shuttle. The high-bay rack is provided with a plurality of groups of shutter arrival rails from bottom to top at equal spacings. The lifting platform can rise and fall to be docked with the layers of shuttle entry rails. In a docking state, the shuttle can travel onto the lifting platform from the shuttle entry rails and travel onto the shuttle entry rails from the lifting platform. An A-mounting beam is arranged on one side of the lifting platform close to the high-bay rack.

## Description

### TECHNICAL FIELD

The present disclosure belongs to the technical field of intelligent warehousing, and more specifically, to a bidirectional blocking device for a lifting platform of an automated storage and retrieval system and a blocking method thereof.

### BACKGROUND

During docking between a lifting platform of a conventional automated storage and retrieval system and a rack rail, an anti-falling protection of a shuttle is usually achieved by relying on a complex sensor system. A sensor array is arranged in a rail docking region to monitor the position of the shuttle in real time, and a brake mechanism is triggered by an electrical signal. However, sensors are susceptible to environmental interference, resulting in false triggering or a response delay. Especially in high-frequency rail-changing operations, a signal transmission delay of a sensor system will cause a limiting action to be not synchronized with the movement of the shuttle. This cannot meet a requirement for instantaneity of high-speed warehousing. Furthermore, there is a lack of physical redundant protection in a case of a sensor failure. When a height difference exists between the platform and the rack rail, the sensors cannot form an effective physical barrier, leading to a risk that the shuttle falls from a high altitude. In addition, a large number of sensor groups need to be provided for a plurality of layers of rails. Consequently, the wiring is complex, and the maintenance costs are high.

### SUMMARY

The invention objectives are as follows: To overcome the shortcomings in the existing technology, the present disclosure provides a bidirectional blocking device for a lifting platform of an automated storage and retrieval system and a blocking method thereof, which can automatically release bidirectional limitation during docking between the lifting platform and a rack rail and automatically form a physical barrier in a docking state. Furthermore, a shuttle always maintains unilateral protection in a platform lifting and lowering process. Meanwhile, a bidirectional interlocking mechanism without external power is constructed, and the problems of delayed responses and complex maintenance in a conventional device are solved.

Technical solutions: To achieve the foregoing objectives, the present disclosure provides a bidirectional blocking device for a lifting platform of an automated storage and retrieval system and a blocking method thereof. The device includes a high-bay rack, a lifting platform, a travel rail, and a shuttle. The high-bay rack is provided with a plurality of groups of shutter arrival rails from bottom to top at equal spacings. The lifting platform can rise and fall to be docked with the layers of shuttle entry rails. In a docking state, the shuttle can travel onto the lifting platform from the shuttle entry rails and travel onto the shuttle entry rails from the lifting platform. An A-mounting beam is arranged on one side of the lifting platform close to the high-bay rack. A B-mounting beam is arranged on a lower part of one side, close to the lifting platform, of each shuttle entry rail. An A-unit and a B-unit are mounted on the A-mounting beam. An A-unit and a B-unit are mounted on the B-mounting beam. The A-unit on the mounting beam A cooperates with the B-unit on the mounting beam B. The A-unit on the B-mounting beams cooperate with the B-unit on the A-mounting beam.

When the A-units and the B-units that cooperate with each other are staggered in height, the A-unit on the A-mounting beam prevents the shuttle from horizontally sliding out on the lifting platform, and the A-unit on the B-mounting beam prevents the shuttle from horizontally sliding out on the shuttle entry rail.

When the A-units and the B-units that cooperate with each other overlap in height, the B-units drive the cooperating A-units to act to disable a function of preventing the shuttle from sliding out.

Further, each A-unit includes a fixed base and a vertically asymmetric rotating main body. A bearing is disposed on the fixed base. The rotating main body is in rotatable fit with the fixed base through the bearing, and a centroid of the rotating main body is located below the bearing. When the A-unit and the B-unit that cooperate with each other are staggered in height, the rotating main body always remains vertically upward.

Further, the rotating main body includes a thin and long smaller end located above the bearing and a wide and short larger end located below the bearing. A kidney-shaped weight reducing slot is formed in the smaller end. A weight-balancing block is mounted at the larger end. A combined action of the weight reducing slot and the weight-balancing block causes the centroid of the rotating main body to be located at the larger end below the bearing.

Further, the lifting platform is provided with a transition rail. The transition rail is able to be docked with each shuttle entry rail. In the docking state, a travel surface of the shuttle entry rail and a travel surface of the transition rail are coplanar.

Further, when the A-units and the B-units that cooperate with each other are staggered in height, a top end of the rotating main body mounted on the A-mounting beam is higher than the travel surface of the transition rail. A top end of the rotating main body mounted on the B-mounting beam is higher than the travel surface of the shuttle entry rail.

Further, each B-unit includes the driving block and a mounting base. The collision block is arranged at an edge of any one of a left side and a right side of the larger end of the rotating main body. The driving block of the B-unit corresponds to the collision block and is mounted on the lifting platform or each shuttle entry rail through the mounting base. In a process of docking between the lifting platform and each shuttle entry rail of the high-bay rack through a lifting mechanism, the driving block of the B-unit is in contact with the collision block and drives the rotating main body of the A-unit to rotate around the bearing, until the top end of the rotating main body of the A-unit is lower than the travel surface of the transition rail or the travel surface of the shuttle entry rail.

Further, magnets are arranged on one sides, close to each other, of the fixed base and the rotating main body of the A-unit. After a driving block of the B-unit is separated from a collision block on the rotating main body, an attractive force between the two magnets prevents the rotating main body from swinging under an inertia action.

Further, a blocking method of the bidirectional blocking device for a lifting platform of an automated storage and retrieval system is provided.

In an initial state, the A-unit on each B-mounting beam is in a vertical state, and the A-unit is able to prevent the shuttle from falling off from an end of a current shuttle entry rail. When the shuttle needs to move to an upper or lower layer of shuttle entry rail for transportation, the lifting platform rises or falls, through the lifting mechanism, to a position for being docked with a shuttle entry rail on which the current shuttle is currently located. In a process of docking between the lifting platform and the shuttle entry rail, the two B-units simultaneously drive the two A-units to respectively rotate around the bearings of the A-units, until top ends of the two A-units are lower than the travel surface of the shuttle entry rail in the docking state and the travel surface of the transition rail on the lifting platform, to avoid the two A-units from still preventing the shuttle from traveling onto the lifting platform from the current shuttle entry rail after docking. In a process that the lifting platform carrying the shuttle rises or falls through the lifting mechanism, the A-unit on the A-mounting beam is in a vertical state, and the A-unit prevents the shuttle from falling off from the lifting platform.

Beneficial effects: The bidirectional blocking device for the lifting platform of the automated storage and retrieval system and the blocking method thereof of the present disclosure automatically release the bidirectional limitation during the docking between the lifting platform and a rack rail, and apply the asymmetric rotating main bodies and a magnetic attraction stabilization structure, and in the docking state, a physical barrier is automatically formed. Furthermore, the shuttle always remains unilateral protection in the rising and falling processes of the platform. Meanwhile, a bidirectional interlocking mechanism without external power is constructed, so that absolute limitation in a non-docking state can be ensured through a gravity self-resetting characteristic. Due to the centroid design of the rotating main body, a blocking portion always remains vertical. During rail docking, the driving block collides to trigger synchronous rotation, thus implement seamless docking of two rails. A magnet assembly effectively suppresses inertial swinging to enhance system stability.

### BRIEF DESCRIPTION OF THE DRAWINGS

FIG. 1 is a schematic diagram of a structure of a bidirectional blocking device in a falling state of a lifting platform;
FIG. 2 is a schematic diagram of a structure of a bidirectional blocking device in a rising state of a lifting platform;
FIG. 3 is a schematic diagram of a structure of an A-unit;
FIG. 4 is a schematic diagram of assembling of a structure of an A-unit;
FIG. 5 is a schematic diagram of a structure of a B-unit;
FIG. 6 is a schematic diagram of lateral assembling of an A-unit;
FIG. 7 is a schematic diagram of cooperation between an A-unit and a B-unit;
FIG. 8 is a schematic diagram of a structure of an A-unit according to a second embodiment;
FIG. 9 is a side view of an A-unit according to a second embodiment; and
FIG. 10 is a side view of an A-unit according to a third embodiment.

### DETAILED DESCRIPTION OF THE EMBODIMENTS

The present disclosure will be further explained below in conjunction with the accompanying drawings.

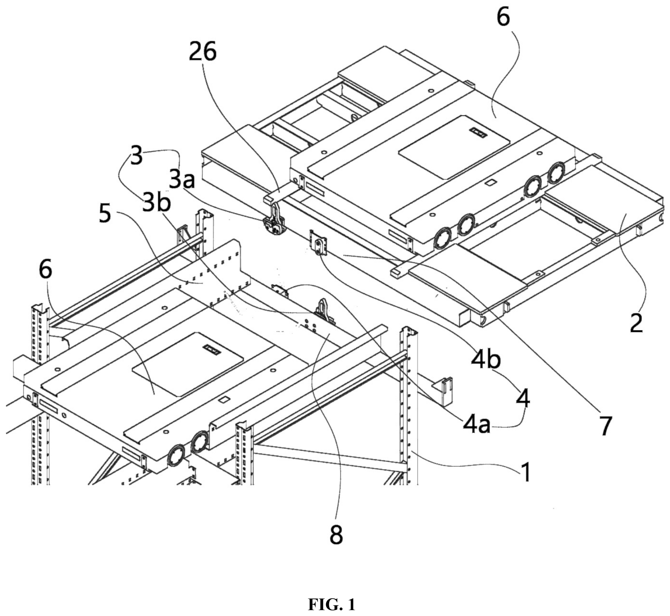

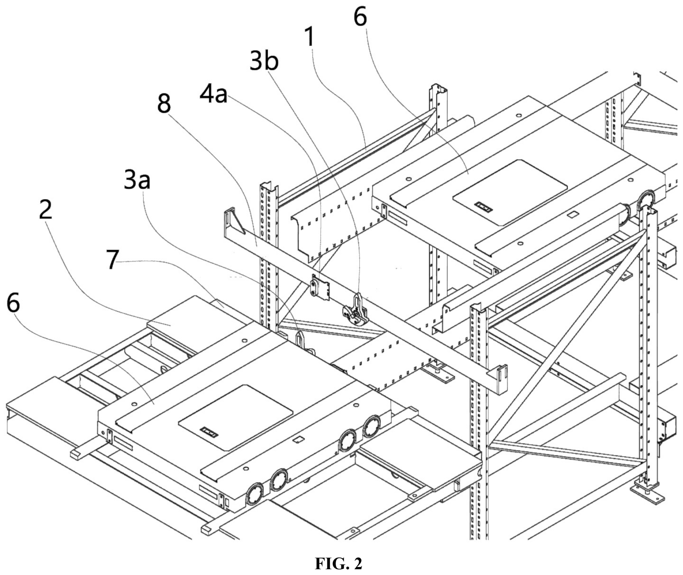

As shown in FIG. 1 to FIG. 2, a bidirectional blocking device for a lifting platform of an automated storage and retrieval system and a blocking method thereof are provided. The device includes a high-bay rack 1, a lifting platform 2, a travel rail, and a shuttle 6. The high-bay rack 1 is provided with a plurality of groups of shuttle entry rails 5 from bottom to top at equal spacings. A layer of shuttle entry rail 5, closest to the ground, on the high-bay rack 1 is designated as a first-layer shuttle entry rail 5.1. Other shuttle entry rails 5 on the high-bay rack 1 sequentially include, from bottom to top, a second-layer shuttle entry rail 5.2, the third-layer shuttle entry rail 5.3, and so on, and a layer of shuttle entry rail 5.n, farthest from the ground, on the high-bay rack 1. Shuttle lifting regions that vertically overlap are arranged at the same positions of the layers of shuttle entry rails 5 on the high-bay rack 1 (not shown in the figures). The shuttle lifting regions are vertically stacked to form a vertical lifting passage (not shown in the figures). A lifting mechanism (not shown in the figures) capable of performing vertical lifting is disposed within the lifting passage. The lifting platform 2 is in sliding fit with the lifting rail of the lifting mechanism, and a transition rail 26 is arranged on the lifting platform 2. In a docking state, a travel surface of the transition rail 26 and a travel surface of each shuttle entry rail 5 are in the same horizontal plane. When the lifting platform 2 rises or falls vertically relative to the high-bay rack 1 by the lifting device to be docked with any layer of shuttle entry rail 5, the shuttle 6 can travel onto the transition rail 26 from the shuttle entry rail 5, or the shuttle 6 can travel onto the shuttle entry rail 5 from the lifting platform 2. A lifting and docking process of the lifting platform 2 is as follows:

In an initial state, the lifting platform 2 is docked with the first-layer shuttle on the entry rail 5.1. When the lifting platform 2 rises from the first-floor shuttle entry rail 5.1 to the third-floor shuttle entry rail 5.3 through the lifting mechanism, the transition rail 26 on the lifting platform 2 is sequentially docked with the second-layer shuttle entry rail 5.2 and the third-floor shuttle entry rail 5.3 in the rising process. In addition, before the lifting platform 2 is docked with the third-floor shuttle entry rail 5.3, the rising speed of the lifting platform 2 does not decrease, meaning that the lifting platform 2 is separated immediately after being docked with the second-layer shuttle entry rail 5.2. When the lifting platform 2 is in a state of being docked with the third-layer shuttle entry rail 5.3, the shuttle 6 on the third-layer shuttle entry rail 5.3 can move from the third-layer shuttle vehicle entry rail 5.3 onto the transition rail 26 on the lifting platform 2, or the shuttle vehicle 6 on the lifting platform 2 can move from the transition rail 26 onto the third-layer shuttle entry rail 5.3.

An A-mounting beam 7 is arranged on one side of the lifting platform 2 close to the high-bay rack 1. A B-mounting beam 8 is arranged on a lower part of one side, close to the lifting platform 2, of each shuttle entry rail 5. An A-unit 3 and a B-unit 4 are mounted on the A-mounting beam 7. An A-unit 3 and a B-unit 4 are mounted on the B-mounting beam 8. The A-unit 3 on the A-mounting beam 7 cooperates with the B-unit 4 on the B-mounting beam 8. The A-unit 3 on the B-mounting beam 8 cooperate with the B-unit 4 on the A-mounting beam 8.

When the A-units 3 and the B-units 4 that cooperate with each other are staggered in height, an upper end of the A-unit 3 on the A-mounting beam 7 is higher than a lower end of a vehicle body of the shuttle 6 running on the transition rail 26, and the A-unit 3 on the A-mounting beam 7 prevents the shuttle 6 from horizontally sliding out on the shuttle arrival rail (2). An upper end of the A-unit 3 on the B-mounting beam 8 is higher than a lower end of the vehicle body of the shuttle 6 running on the shuttle entry rail 5, and the A-unit 3 on the B-mounting beam 8 prevents the shuttle 6 from horizontally sliding out on the shuttle entry rail 5. That is, when the lift platform 2 moves between the layers of shuttle entry rails 5 in the high-bay rack 1 or stops at a non-docking position through the lifting mechanism, the A-unit 3 on the B-mounting beam 8 prevents abnormal running of the shuttle 6 on the lift platform 2 or on the shuttle entry rail 5. When the shuttle 6 on a layer of shuttle entry rail 5 needs to be transferred to another layer of shuttle entry rail 5 through the lifting platform 2, before the lifting platform 2 completes docking with the shuttle entry rail 5 on which the shuttle 6 is located, the A-unit 3 on the B-mounting beam 8 arranged on the shuttle entry rail 5 on which the shuttle 6 is located prevents the shuttle 6 from traveling onto the lifting platform 2 from this layer of shuttle entry rail 5 after receiving a wrong command, thus avoiding the phenomenon that the shuttle 6 falls onto the ground from the high-bay rack 1 because of the receiving of the wrong command. The A-unit 3 on the A-mounting beam 7 can prevent the shuttle 6 from running abnormally on the lifting platform, thus avoiding the phenomenon that the shuttle 6 falls onto the ground from the lifting platform 2 because of the receiving of the wrong command.

When the A-unit 3 and the B-unit 4 that cooperate with each other overlap in height, the B-unit 4 drives the cooperating A-unit 3 to release the function of preventing the shuttle 6 from sliding out. That is, when the lifting platform 2 is docked with any layer of shuttle entry rail 5, the A-unit 3 is located below the travel surface of the shuttle entry rail 5 and the travel surface of the transition rail 26. The shuttle 6 can travel onto the transition rail 26 from the shuttle entry rail 5, or the shuttle 6 can travel to the shuttle entry rail 5 from the lifting platform 2.

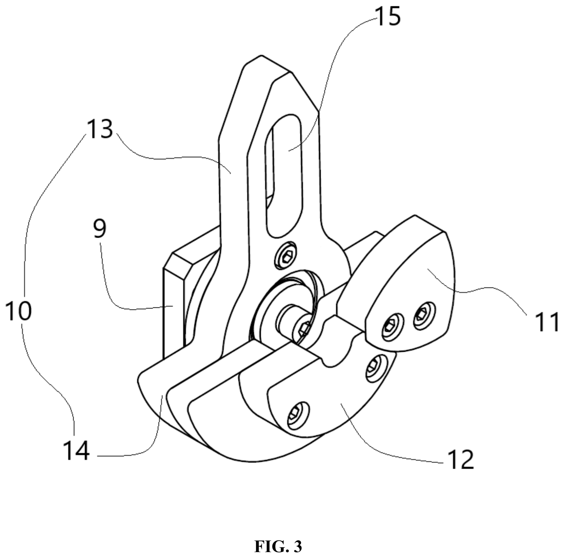

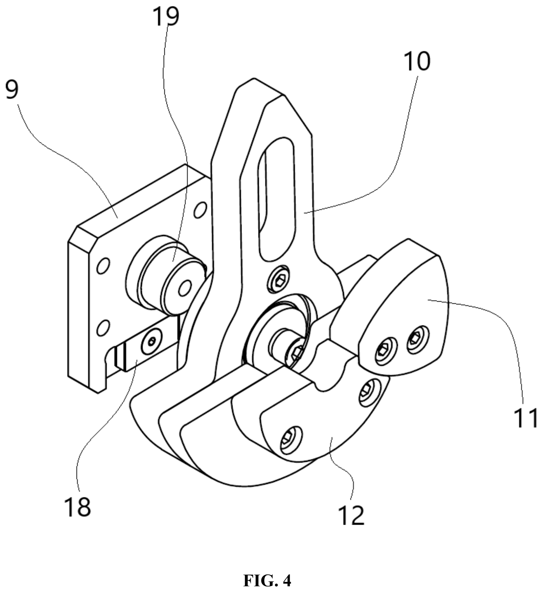

As shown in FIG. 3 to FIG. 4, each unit-A 3 includes a fixed base 9 and a vertically asymmetric rotating main body 10. The rotating main body 10 is in rotatable fit with the fixed base 9 through a bearing 19, and a centroid of the rotating main body 10 is located below the bearing 19. In an state with no external force, i.e., in a non-docking state, the rotating main body 10 always remains vertically upward. When the A-unit 3 and the B-unit 4 that cooperate with each other, are staggered in height, the rotating main body 10 always remains vertically upward. The A-unit 3 on the A-mounting beam 7 can prevent the shuttle 6 from traveling to the shuttle entry rail 5 from the transition rail 26 of the lifting platform 2 after receiving a wrong command, thereby avoiding the phenomenon that the shuttle 6 falls onto the ground from the lifting platform 2 because of the receiving of the wrong command. A top end of the rotating main body 10 in the A-unit 3 mounted on the B-mounting beam 8 is higher than the travel surface of the shuttle entry rail 5. The A-unit 3 on the B-mounting beam 8 prevents the shuttle 6 from traveling to the transition rail 26 on the lifting platform 2 from the shuttle entry rail 5 after receiving the wrong command, thereby avoiding the phenomenon that the shuttle 6 falls onto the ground from the high-bay rack 1 because of the receiving of the wrong command.

The rotating main body 10 includes a thin and long smaller end 13 located above the bearing 19 and a wide and short larger end 14 located below the bearing 19. The larger end 14 and the smaller end 13 are integrally connected to each other. A kidney-shaped weight reducing slot 15 is formed in the smaller end 13. A weight-balancing block 12 is mounted at the larger end 14. A combined action of the weight reducing slot 15 and the weight-balancing block 12 causes the centroid of the rotating main body 10 to be located at the larger end 14 below the bearing 19. Thus, it ensures that in a case that the rotating main body 10 is only subjected to its own gravity, the smaller end 13 always remains in a vertically upward state. Therefore, it ensures that without an external force, an upper end of the smaller end 13 is always higher than the travel surface of the shuttle entry rail 5 and the travel surface of the transition rail 26 on the lifting platform 2, to ensure that when the shuttle 6 on the shuttle entry rail 5 or the shuttle 6 on the lifting platform 2 receives a wrong command and then travels along the travel surface of the shuttle entry rail 5 or along the travel surface of the transition rail 26, the smaller end 13 of the rotating main body 10 can be in limiting contact with a side edge of the shuttle 6, thereby avoiding the phenomenon that the shuttle 6 falls onto the ground from the high-bay rack 1 or the lifting platform 2 because of the receiving of the wrong command.

A contour of one side of the larger end 14 away from the smaller end 13 is an arc-shaped contour. In this way, the impact of the A-unit 3 on transportation of lower layers of goods can be effectively mitigated.

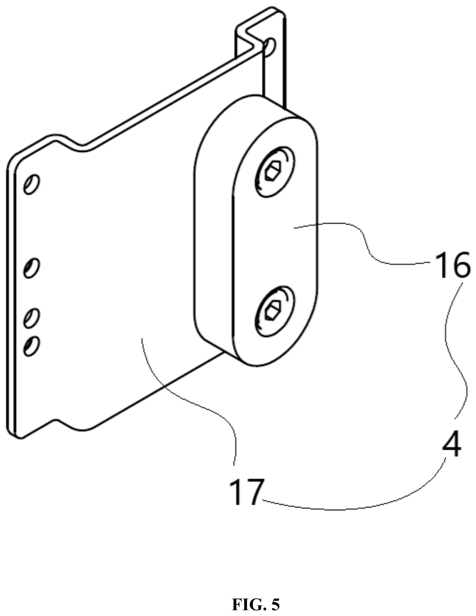

As shown in FIG. 5, a B-unit 4 is further included. The B-unit 4 includes a driving block 16 and a mounting base 17. A collision block 11 is arranged at an edge of any one of a left side and a right side of the larger end 14 of the rotating main body 10. The driving block 16 of the B-unit 4 corresponds to the collision block 11 and is mounted on the lifting platform 2 or on each shuttle entry rail 5 through the mounting base 17. That is, relative to the collision block 11, the driving block 16 is mounted on one side of the lifting platform 2 close to each shuttle entry rail 5 through the mounting base 17, or relative to the collision block 11, the driving block 16 is mounted on one side of each shuttle entry rail 5 close to the lifting platform 2 through the mounting base 17. In the process of docking between the lifting platform 2 and each shuttle entry rail 5 of the high-bay rack 1 through the lifting mechanism, the driving blocks 16 of the two B-units 4 are respectively in contact with the collision blocks 11 of the cooperating A-units 3, and drive the rotating main bodies 10 to rotate around the bearings 19, until the upper ends of the smaller ends 13 of the relative rotating main bodies 10 rotate to be below both the travel surface of the shuttle entry rail 5 and the travel surface of the transition rail 26. Thus, this avoids the phenomenon that after the transition rail 26 on the lifting platform 2 is docked with the shuttle entry rail 5, the rotating main body 10 prevents the shuttle 6 from traveling onto the transition rail 26 on the lifting platform 2 from the shuttle entry rail 5, or the rotating main body 10 prevents the shuttle 6 from traveling onto the shuttle entry rail 5 from the transition rail 26 on the lifting platform 2.

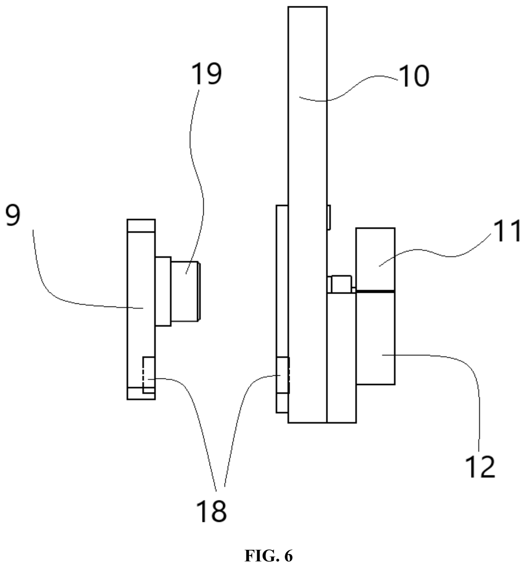

As shown in FIG. 6, magnets 18 are arranged on one sides, close to each other, of the fixed base 9 and the rotating main body 10 of the A-unit 3. After the driving block 16 of the unit-B 4 is separated from the collision block 11 on the rotating main body 10, an attractive force between the two magnets 18 can prevent the rotating main body 10 from swinging under an inertia action.

In the initial state, the A-unit 3 on the A-mounting beam 7 is in a vertical state, and the A-unit 3 on the B-mounting beam 8 is in a vertical state. In addition, the A-unit 3 can prevent the shuttle 6 from falling off from an end of a current shuttle entry rail 5.

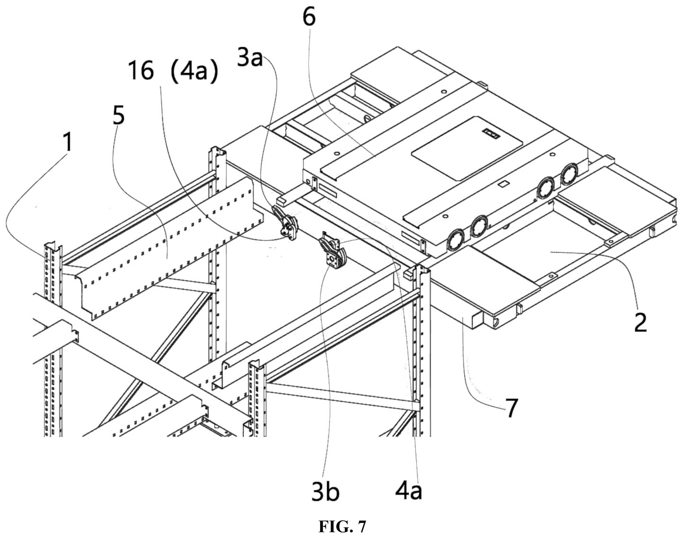

As shown in FIG. 1 and FIG. 7, a blocking method of the bidirectional blocking device for a lifting platform of an automated storage and retrieval system is provided: when the shuttle 6 needs to move to an upper or lower layer of shuttle entry rail 5 for transportation, the lifting platform 2 rises or falls, through the lifting mechanism, to a position for being docked with a shuttle entry rail 5 on which the current shuttle 6 is currently located. In the process of docking between the lifting platform 2 and the shuttle entry rail 5, the driving block 16 of the B-unit 4 on the B-mounting beam 8 collides with the collision block 11 of the A-unit 3 on the A-mounting beam 7, so that the A-unit 3 on the A-mounting beam 7 rotates around its own bearing 19, until a top end of the A-unit 3 on the A-mounting beam 7 is lower than the travel surface of the shuttle entry rail 5 in the docking state and a lifting surface of the lifting platform 2. Meanwhile, the driving block 16 of the B-unit 4 on the A-mounting beam 7 collides with the collision block 11 of the A-unit 3 on the B-mounting beam 8, so that the A-unit 3 on the B-mounting beam 8 rotates around its own bearing 19, until a top end of the A-unit 3 on the B-mounting beam 8 is lower than the travel surface of the shuttle entry rail 5 in the docking state and the lifting surface of the lifting platform 2, thereby avoiding the A-units 3 on the A-mounting beam 7 and the B-mounting beam 8 from preventing the shuttle 6 from traveling onto the lifting platform 2 from the current shuttle entry rail 5 after docking. After the docking is completed, when the contact between the A-units 3 and the B-unit 4 is released, the A-units 3 quickly rotate around the bearings 19 to the vertical states under the action of the magnets 18. In the process that the lifting platform 2 carrying the shuttle 6 rises or falls through the lifting mechanism, the A-unit 3 on the A-mounting beam 7 is in the vertical state, and the A-unit 3 can prevent the shuttle 6 from falling off from the lifting platform 2.

The A-unit 3 is further provided with a speed detection device. The speed detection device can detect a value of a rotation angle of the rotating main body 10 of the A-unit 3 relative to the bearing 19 within every second. When the speed detection device detects that the rotation angle of the rotating main body 10 of the A-unit 3 relative to the bearing 19 is too large within every second, it indicates that a lifting speed of the lifting platform 2 is abnormal, and a fault appears in the lifting mechanism that drives the lifting platform 2 to perform a lifting motion. For example, when the lifting platform 2 is in a higher position, the lifting mechanism malfunctions and causes the lifting platform 2 to perform free fall, or the like. The lifting platform 2 is provided with an alarm device. The speed detection device is in signal linkage with the alarm device. When the value detected by the speed detection device is greater than a preset value, the speed detection device triggers the alarm device to issue an alarm.

The above content is the first embodiment of this solution. In the first embodiment, the magnets 18 are arranged on one sides, close to each other, of the fixed base 9 and the rotating main body 10 of the A-unit 3, to solve the problem that the A-unit 3 swings back and forth under the inertia action after the contact state between the A-unit 3 and the B-unit 4 is released. However, since goods stored on the high-bay rack 1 will frequently change, the presence of the magnets 18 increase the collision degree between the B-unit 4 and the A-unit 3 under the driving of the lifting platform 2, resulting in vibrations of goods on the shuttle 6 carrying the goods on the lifting platform 2. Moreover, every time the lifting platform 2 rises or falls one layer, the vibrations will occur. If the goods on the shuttle 6 are fragile products at this time, the vibrations will cause damage to the goods. For the foregoing problem, this solution provides a second embodiment.

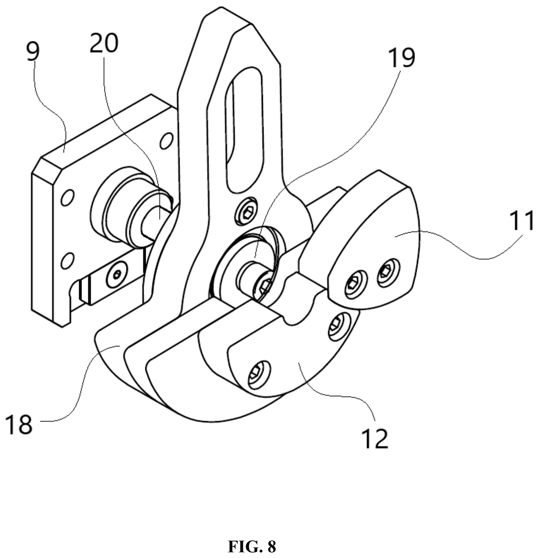

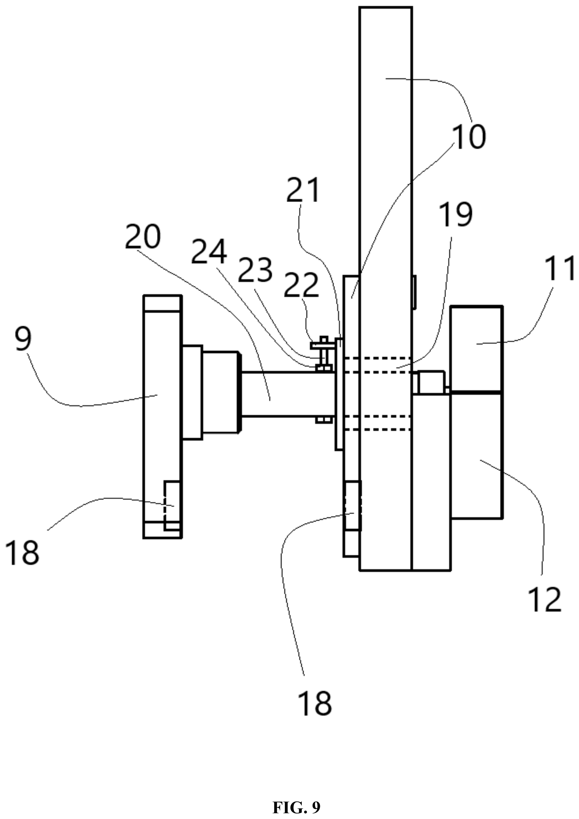

As shown in FIG. 8 to FIG. 9, a rotating shaft 20 is vertically arranged on the fixed base 9, and the bearing 19 on the rotating main body 10 is coaxially slidably sleeved on the rotating shaft 20. The rotating main body 10 can adjust a mutual attractive force between the two magnets 18 by sling of the bearing 19 in a length direction of the rotating shaft 20.

The rotating shaft 20 is provided with a sliding adjustment slot. A locking bolt 23 is in sliding fit inside the sliding adjustment slot. The rotating shaft 20 is sleeved with an axial limiting plate 21. The axial limiting plate 21 is located between the fixed base 9 and the rotating main body 10, and a limiting surface of the axial limiting plate 21 is always in contact with one side of the rotating main body 10 close to the fixed base 9. A limiting bracket 22 is arranged on one side of the axial limiting plate 21 away from the rotating main body 10. One end of the locking bolt 23 passes through the sliding adjustment slot and is in threaded fit with the limiting bracket 22. The locking bolt 23 is located on a screw rod between the limiting bracket 22 and the rotating shaft 20 and is in threaded fit with a locking nut 24. The threaded fit between the locking nut 24 and the locking bolt 23 can lock the axial limiting plate 21 onto the rotating shaft 20. Thus, the axial limiting plate 21 axially limits the rotating main body 10.

In the second embodiment, management personnel can adjust a position of the locking bolt 23 in the sliding adjustment slot based on a type of goods currently stored in the high-bay rack 1, to change a distance between the two magnets 18 arranged on one sides, close to each other, of the fixed base 9 and the rotating main body 10 of the A-unit 3, thereby achieving a purpose of adjusting the mutual attractive force between the two magnets 18 and reducing the collision degree between the B-unit 4 and the A-unit 3 under the driving of the lifting platform 2. Within an adjustable range, the rotating main body 10 always has a trend to move towards the fixed base 9 under the mutual attractive force between the two magnets 18.

Although the modifications made in the second embodiment can change the mutual attractive force between the two magnets in the A-unit 3 based on a lifting speed corresponding to the type of the goods stored in the high-bay rack 1, in the second embodiment, regardless of whether the lifting platform 2 is in a no-load state, whether the lifting platform 2 carries the shuttle 6 that does not transport goods, whether the lifting platform 2 carries the shuttle 6 that transports goods, or other different situations, the lifting speed of the lifting platform 2 is the same. It is hard to enhance the operation efficiency of the automated storage and retrieval system, so that this solution provides a third embodiment.

A rotating shaft 20 is vertically arranged on the fixed base 9, and the bearing 19 on the rotating main body 10 is coaxially slidably sleeved on the rotating shaft 20. The rotating main body 10 can adjust the mutual attractive force between the two magnets 18 by sling of the bearing 19 in a length direction of the rotating shaft 20.

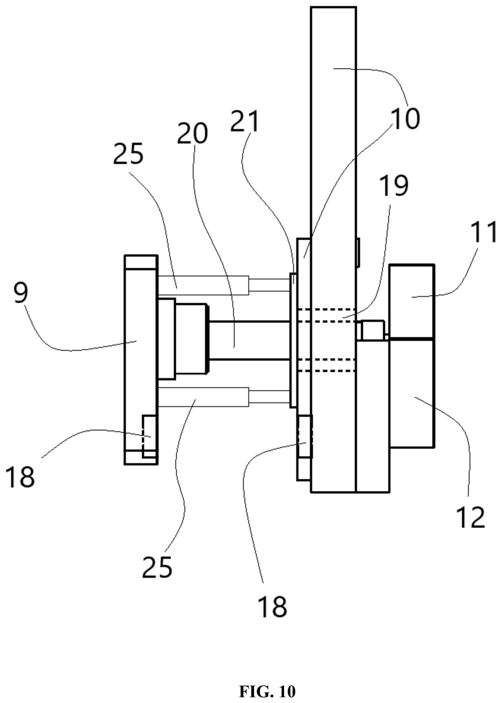

As shown in FIG. 10, an axial limiting plate 21 is sleeved on the rotating shaft 20. The axial limiting plate 21 is located between the fixed base 9 and the rotating main body 10, and a limiting surface of the axial limiting plate 21 is always in contact with one side of the rotating main body 10 close to the fixed base 9. An electric telescopic rod 25 is arranged on the fixed base 9 and corresponds to the axial limiting plate 21. A telescopic end of the electric telescopic rod 25 is fixedly connected to one side of the axial limiting plate 21 away from the rotating main body 10.

Within a telescopic range of the electric telescopic rod 25, the rotating main body 10 always has a trend to move towards the fixed base 9 under the mutual attractive force between the two magnets 18.

A gravity sensor is disposed on the transition rail 26 of the lifting platform 2. The gravity sensor can identify a weight of a load on the transition rail 26 and is in signal linkage with the electric telescopic rod 25. The gravity sensor is configured with no-load data, first gravity data, and second gravity data that respectively correspond to three cases: the lifting platform 2 is in a no-load state, the lifting platform 2 carries the shuttle 6 that does not transport goods, and the lifting platform 2 carries the shuttle 6 that transports goods. The third gravity data can be adjusted properly based on a type of goods. After the lifting platform 2 receives a rise or fall command, if the gravity sensor does not detect data, it indicates that the lifting platform 2 is in the no-load state, and the gravity sensor controls the telescopic end of the electric telescopic rod 25 to extend a maximum length. If the gravity sensor detects the first gravity data, it indicates that the lifting platform 2 carries the shuttle 6 that transports goods. The gravity sensor controls the telescopic end of the electric telescopic rod 25 to extend a length in which there is almost no collision between the B-unit 4 and the A-unit 3 under the driving of the lifting platform 2. If the gravity sensor detects the second gravity data, it indicates that the lifting platform 2 carries the shuttle 6 that transports goods. The gravity sensor controls the telescopic end of the electric telescopic rod 25 to extend a length in which there is almost no collision between the B-unit 4 and the A-unit 3 under the driving of the lifting platform 2.

The foregoing descriptions are preferable implementations of the present disclosure. It is noted that a person of ordinary skill in the art may make some improvements and modifications without departing from the principle of the present invention and the improvements and modifications shall also fall within the protection scope of the present disclosure.

## Claims

1. A bidirectional blocking device for a lifting platform of an automated storage and retrieval system, wherein the device comprises a high-bay rack (1), a lifting platform (2), a travel rail, and a shuttle (6), wherein the high-bay rack (1) is provided with a plurality of groups of shutter arrival rails (5) from bottom to top at equal spacings; the lifting platform (2) is able to rise and fall to be docked with the layers of shuttle entry rails (5); in a docking state, the shuttle (6) is able to travel onto the lifting platform (2) from the shuttle entry rails (5) and is able to travel onto the shuttle entry rails (5) from the lifting platform (2); an A-mounting beam (7) is arranged on one side of the lifting platform (2) close to the high-bay rack (1); a B-mounting beam (8) is arranged on a lower part of one side, close to the lifting platform (2), of each shuttle entry rail (5); an A-unit (3) and a B-unit (4) are mounted on the A-mounting beam (7); an A-unit (3) and a B-unit (4) are mounted on the B-mounting beam (8); the A-unit (3) on the A-mounting beam (7) cooperates with the B-unit (4) on the B-mounting beam (8); the A-unit (3) on the B-mounting beam (8) cooperates with the B-unit (4) on the A-mounting beam (7);
when the A-units (3) and the B-units (4) that cooperate with each other are staggered in height, the A-unit (3) on the A-mounting beam (7) prevents the shuttle (6) from horizontally sliding out on the lifting platform (2), and the A-unit (3) on the B-mounting beam (8) prevents the shuttle (6) from horizontally sliding out on the shuttle entry rail (5);
when the A-units (3) and the B-units (4) that cooperate with each other overlap in height, the B-units (4) drive the cooperating A-units (3) to act to disable a function of preventing the shuttle (6) from sliding out;
the lifting platform (2) is provided with a transition rail (26); the transition rail (26) is able to be docked with each shuttle entry rail (5); in the docking state, a travel surface of the shuttle entry rail (5) and a travel surface of the transition rail (26) are coplanar;
each A-unit (3) comprises a fixed base (9) and a vertically asymmetric rotating main body (10); a bearing (19) is disposed on the fixed base (9); the rotating main body (10) is in rotatable fit with the fixed base (9) through the bearing (19), and a centroid of the rotating main body (10) is located below the bearing (19); when the A-unit (3) and the B-unit (4) that cooperate with each other are staggered in height, the rotating main body (10) always remains vertically upward;
magnets (18) are arranged on one sides, close to each other, of the fixed base (9) and the rotating main body (10) of the A-unit (3); after a driving block (16) of the B-unit (4) is separated from a collision block (11) on the rotating main body (10), an attractive force between the two magnets (18) prevents the rotating main body (10) from swinging under an inertia action;
a rotating shaft (20) is vertically disposed on the fixed base (9); the bearing (19) on the rotating main body (10) is coaxially slidably sleeved on the rotating shaft (20); the rotating main body (10) is able to adjust a mutual attractive force between the two magnets (18) by sliding of the bearing (19) in a length direction of the rotating shaft (20); an axial limiting plate (21) is sleeved on the rotating shaft (20); the axial limiting plate (21) is located between the fixed base (9) and the rotating main body (10), and a limiting surface of the axial limiting plate (21) is always in contact with one side of the rotating main body (10) close to the fixed base (9); an electric telescopic rod (25) is arranged on the fixed base (9) and corresponds to the axial limiting plate (21); a telescopic end of the electric telescopic rod (25) is fixedly connected to one side of the axial limiting plate (21) away from the rotating main body (10);
a gravity sensor is disposed on the transition rail (26) of the lifting platform (2); the gravity sensor is able to identify a weight of a load on the transition rail (26) and is in signal linkage with the electric telescopic rod (25); the gravity sensor is configured with no-load data, first gravity data, and second gravity data that respectively correspond to three cases: the lifting platform (2) is in a no-load state, the lifting platform (2) carries the shuttle (6) that does not transport goods, and the lifting platform (2) carries the shuttle (6) that transports goods; and after the gravity sensor detects any of the foregoing data, the telescopic end of the electric telescopic rod (25) extends to a corresponding length.

2. The bidirectional blocking device for the lifting platform of the automated storage and retrieval system according to claim 1, wherein the rotating main body (10) comprises a thin and long smaller end (13) located above the bearing (19) and a wide and short larger end (14) located below the bearing (19); a kidney-shaped weight reducing slot (15) is formed in the smaller end (13); a weight-balancing block (12) is mounted at the larger end (14); and a combined action of the weight reducing slot (15) and the weight-balancing block (12) causes the centroid of the rotating main body (10) to be located at the larger end (14) below the bearing (19).

3. The bidirectional blocking device for the lifting platform of the automated storage and retrieval system according to claim 1, wherein when the A-units (3) and the B-units (4) that cooperate with each other are staggered in height, a top end of the rotating main body (10) mounted on the A-mounting beam (7) is higher than the travel surface of the transition rail (26); and a top end of the rotating main body (10) mounted on the B-mounting beam (8) is higher than the travel surface of the shuttle entry rail (5).

4. The bidirectional blocking device for the lifting platform of the automated storage and retrieval system according to claim 2, wherein each B-unit (4) comprises the driving block (16) and a mounting base (17); the collision block (11) is arranged at an edge of any one of a left side and a right side of the larger end (14) of the rotating main body (10); the driving block (16) of the B-unit (4) corresponds to the collision block (11) and is mounted on the lifting platform (2) or each shuttle entry rail (5) through the mounting base (17); and in a process of docking between the lifting platform (2) and each shuttle entry rail (5) of the high-bay rack (1) through a lifting mechanism, the driving block (16) of the B-unit (4) is in contact with the collision block (11) and drives the rotating main body (10) of the A-unit (3) to rotate around the bearing (19), until the top end of the rotating main body (10) of the A-unit (3) is lower than the travel surface of the transition rail (26) or the travel surface of the shuttle entry rail (5).

5. A blocking method of the bidirectional blocking device for a lifting platform of an automated storage and retrieval system according to claim 1, wherein in an initial state, the A-unit (3) on each B-mounting beam (8) is in a vertical state, and the A-unit (3) is able to prevent the shuttle (6) from falling off from an end of a current shuttle entry rail (5); when the shuttle (6) needs to move to an upper or lower layer of shuttle entry rail (5) for transportation, the lifting platform (2) rises or falls, through the lifting mechanism, to a position for being docked with a shuttle entry rail (5) on which the current shuttle (6) is currently located; in a process of docking between the lifting platform (2) and the shuttle entry rail (5), the two B-units (4) simultaneously drive the two A-units (3) to respectively rotate around the bearings (19) of the A-units, until top ends of the two A-units (3) are lower than the travel surface of the shuttle entry rail (5) in the docking state and the travel surface of the transition rail (26) on the lifting platform (2), to avoid the two A-units (3) from still preventing the shuttle (6) from traveling onto the lifting platform (2) from the current shuttle entry rail (5) after docking; and in a process that the lifting platform (2) carrying the shuttle (6) rises or falls through the lifting mechanism, the A-unit (3) on the A-mounting beam (7) is in a vertical state, and the A-unit (3) prevents the shuttle (6) from falling off from the lifting platform (2).
